# EUROPEAN PATENT APPLICATION

(11) **EP 4 629 647 A1**
(43) Date of publication of application: **08.10.2025**
(21) Application number: 24305521.7
(22) Date of filing: 04.04.2024
(51) Int. Cl.: H04N 21/81, G06T 13/40, G06T 17/00, G06T 19/20, H04N 21/854

(54) **CARRIAGE FORMAT FOR AVATAR MAPPING AND ANIMATION**

(71) Applicant: InterDigital CE Patent Holdings, SAS, 75017 Paris (FR)
(72) Inventor: COVA REGATEIRO, João Pedro, 35220 CHATEAUBOURG (FR); GOSSELIN, Philippe Henri, 35235 THORIGNE-FOUILLARD (FR); AVRIL, Quentin, 35830 BETTON (FR); LE CLERC, Francois, 35590 L'HERMITAGE (FR); GUILLOTEL, Philippe, 35770 VERN SUR SEICHE (FR)
(74) Representative: Vossius & Partner Patentanwälte Rechtsanwälte mbB

(57) **Abstract**

Some embodiments of a method may include: obtaining information corresponding to an avatar, wherein the information comprises a first avatar representation associated with a parameter; mapping the first avatar representation to a second avatar representation, storing the second avatar representation in a data structure corresponding to the associated parameter; and streaming the second avatar representation to an external device.

## Description

### INCORPORATION BY REFERENCE

The present application incorporates by reference in their entirety the following applications: European Patent Application Serial No. EP24305326, entitled "AVATAR BLENDSHAPE SEMANTICS REPRESENTATION" and filed March 4, 2024 ("`326 application"); and European Patent Application Serial No. EP24305092, entitled "GEOMETRY AVATAR MEDIA CODEC FOR TRANSMISSION" and filed January 15, 2024 ("'092 application").

### BACKGROUND

According to *Information Technology Coded Representation of Immersive Media Part 14: Scene Description,* ISO/IEC, ISO/IEC 23090-14:2023 (2023) (*"ISO*/*IEC 23090-14:2023'*), the current contributions in MPEG for the streaming of animation data is linked with the reanimation of volumetric meshes through pre-computed correspondences to a template mesh (shadow mesh).

### SUMMARY

An example method in accordance with some embodiments may include: receiving, from a server, a first avatar representation, wherein the first avatar representation is associated with a parameter corresponding to an avatar; mapping the first avatar representation to a second avatar representation, wherein the first avatar representation corresponds to a shadow mesh identifying polygons corresponding to the avatar, and wherein the second avatar representation corresponds to a volumetric mesh identifying vertices corresponding to the avatar; storing the second avatar representation in a data structure corresponding to the associated parameter; and animating the second avatar representation in an immersive environment.

Some embodiments of the example method may further include receiving a plurality of timed, media metadata track frames, wherein at least one of the plurality of timed, media metadata track frames includes a series of correspondence values used with the mapping.

For some embodiments of the example method, the parameter corresponds to a shape, semantics, articulation, or animation parameter of the avatar.

For some embodiments of the example method, the second avatar representation includes a series of time-based data segments.

For some embodiments of the example method, mapping the first avatar representation to a second avatar representation includes mapping a source avatar mesh to a target avatar mesh, the first avatar representation is associated with the source avatar mesh, and the second avatar representation is associated with the target avatar mesh.

For some embodiments of the example method, mapping the first avatar representation to a second avatar representation includes mapping semantics of a source avatar mesh to semantics of a target avatar mesh.

For some embodiments of the example method, mapping the first avatar representation to a second avatar representation includes determining a correspondence between a source avatar mesh and a target avatar mesh, the first avatar representation is associated with the source avatar mesh, and the second avatar representation is associated with the target avatar mesh.

For some embodiments of the example method, determining the correspondence between the source avatar mesh and the target avatar mesh includes determining a correspondence of joints between the source avatar mesh and the target avatar mesh.

For some embodiments of the example method, determining the correspondence between the source avatar mesh and the target avatar mesh includes determining a morph target correspondence between the source avatar mesh and the target avatar mesh.

For some embodiments of the example method, mapping the first avatar representation to a second avatar representation includes determining a morph target animation between a source avatar mesh and a target avatar mesh, the first avatar representation is associated with the source avatar mesh, and the second avatar representation is associated with the target avatar mesh.

For some embodiments of the example method, mapping the first avatar representation to a second avatar representation includes mapping keypoints of a source avatar mesh to keypoints of a target avatar mesh.

For some embodiments of the example method, at least one of the first avatar representation and the second avatar representation is configured to support a MPEG-based format.

For some embodiments of the example method, at least one of the first avatar representation and the second avatar representation is configured to support a gITF-based format.

For some embodiments of the example method, at least one of the first avatar representation and the second avatar representation is configured to support an ISO/BMFF-based format.

An example apparatus in accordance with some embodiments may include: a processor; and a non-transitory computer-readable medium storing instructions operative, when executed by the processor, to cause the apparatus to perform any one of the methods listed above.

### BRIEF DESCRIPTION OF THE DRAWINGS

FIG. 1 is a system diagram illustrating an example set of interfaces for a system according to some embodiments.
FIG. 2 is a code listing showing an example polygons correspondence sample entry class structure according to some embodiments.
FIG. 3 is a code listing showing an example polygons correspondence sample class structure according to some embodiments.
FIG. 4 is a code listing showing an example displacement sample entry class structure according to some embodiments.
FIG. 5 is a code listing showing an example displacement sample class structure according to some embodiments.
FIG. 6 is a code listing showing an example joint correspondence sample entry class structure according to some embodiments.
FIG. 7 is a code listing showing an example joint correspondence sample class structure according to some embodiments.
FIG. 8 is a code listing showing an example morph targets correspondence sample entry class structure according to some embodiments.
FIG. 9 is a code listing showing an example morph targets correspondence sample class structure according to some embodiments.
FIG. 10 is a code listing showing an example morph targets animation sample entry class structure according to some embodiments.
FIG. 11 is a code listing showing an example morph targets animation sample class structure according to some embodiments.
FIG. 12 is a code listing showing an example mappings correspondence sample entry class structure according to some embodiments.
FIG. 13 is a code listing showing an example mappings correspondence sample class structure according to some embodiments.
FIG. 14 is a code listing showing an example keypoints correspondence sample entry class structure according to some embodiments.
FIG. 15 is a code listing showing an example keypoints correspondence sample class structure according to some embodiments.
FIG. 16 is a flowchart illustrating an example process for mapping between avatar representations according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

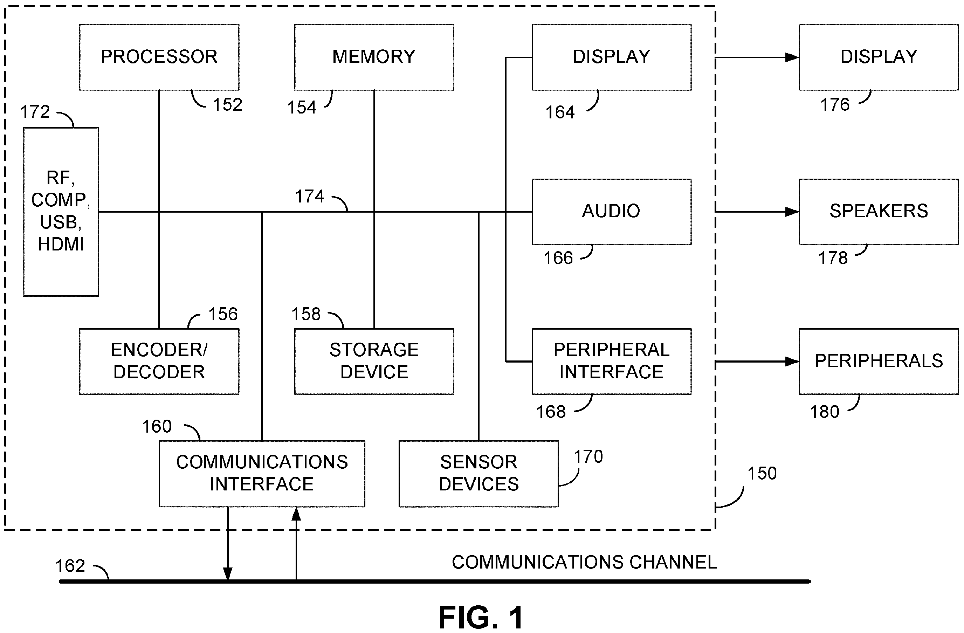

FIG. 1 is a system diagram illustrating an example set of interfaces for a system according to some embodiments. An extended reality display device, together with its control electronics, may be implemented using a system such as the system of FIG. 1. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1C, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

The application discusses the transmission of retargeting and animation data to facilitate the mapping of different avatar representations including shape, semantics, articulations, and animation parameters (e.g., blendshape coefficients). Blendshapes are deformed version of the shape and can be applied with more or less weight (e.g., the blendshape coefficients) to morph the shape. Examples of articulations may include definitions for parts of the body, such as the head, hands, and/or legs among other items. Examples of articulations may include joints of the body like elbows and/or shoulders among other items. Support for streaming animation and retargeting data that is timed-based may be used with real-time streaming applications.

According to *Information Technology Coded Representation of Immersive Media Part 14: Scene Description,* ISO/IEC, ISO/IEC 23090-14:2023 (2023) (*"ISO*/*IEC 23090-14:2023'*)*,* the current contributions in MPEG for the streaming of animation data is linked with the reanimation of volumetric meshes through pre-computed correspondences to a template mesh (shadow mesh).

A shadow mesh in the context of *ISO*/*IEC 23090-14:2023* is a mesh that contains a lower fidelity than the volumetric mesh. The correspondence between a shadow mesh and a volumetric mesh is such that each vertex of the volumetric mesh maps to a polygon of the shadow mesh.

The objective of the shadow mesh is to provide additional semantical information to the volumetric mesh (e.g., skeletal structure and lower polygon mesh representation), thereby permitting the transferring of animations of the shadow mesh onto the dependent volumetric mesh.

At the application level, the volumetric mesh follows the motion of the shadow mesh as a result of the mapping between the volumetric mesh and the shadow mesh. This behavior is achieved by defining in glTF a correspondence schema, which is illustrated in Table 1. Table 1 provides a definition of the top-level objects that are in the MPEG_mesh linking extension, which is discussed in *ISO*/*IEC 23090-14:2023.*

**Table 1.**

| **Name** | **Type** | **Description** |
|---|---|---|
| correspondence | integer | Provides a reference to the accessor |
| mesh | integer | Provides a reference to the shadow mesh |
| pose | integer | Provides a reference to the accessor |
| weights | integer | Provides a reference to the accessor |

The "MPEG_mesh_linking" extension is dependent on circular buffers ("MPEG_buffer_circular") and timed accessors ("MPEG_accessor_timed") to produce timed animations that are dependent on the shadow mesh.

The correspondence value shown in Table 1 provides a reference to the accessor. The correspondence value is an index value into the accessor's array. At that index location is a description (or a buffer location for some embodiments) that indicates the buffer where the correspondence between a dependent mesh and a shadow mesh is available.

The mesh value shown in Table 1 provides a reference to a mesh (referred to as a "shadow mesh") in the list of meshes and to which the correspondences are established. The mesh value is an index value into a meshes array associated with the mesh for which the correspondence values are established.

The pose value shown in Table 1 provides a reference to the accessor. The pose value is an index value into the accessor's array. At that index location is a description (or a buffer location for some embodiments) that indicates where the transformation matrices of all the nodes associated with the dependent mesh to be re-animated is available.

The weights value shown in Table 1 provides a reference to the accessor. The weights value is an index value into the accessor's array. At that index location is a description (or a buffer location for some embodiments) that indicates the buffer where the morph targets weights of the shadow mesh associated with the dependent mesh is available.

The main objective of this extension is to provide a dynamic mesh sequence (e.g., the mesh topology changes per timed frame) and to allow a template mesh (shadow mesh) to either re-animate a frame of the dynamic mesh sequence or to introduce animation on a per-frame basis. In either case, a carriage mechanism is required to be established to make this information available on a timed basis.

### Carriage format specified in MPEG-I SD

The carriage format specified in MPEG-I SD allows the update of the correspondences and/or the pose and morph target coefficients in a timed-based manner by making use of both glTF extensions "MPEG_buffer_circular" and "MPEG_accessor_timed".

MPEG_accessor_timed is an accessor that defines the types and layout of the data stored in a buffer that is referenced by a "bufferView". In the case where the timed media is accessed in a buffer, the data in the buffer is expected to change with time. Hence, "MPEG_accessor_timed" defines an extension to the accessor to allow the description of dynamically changing data. When "MPEG_accessor_timed" is defined as an extension of the accessor, the buffer shall be a "MPEG_buffer_circular".

MPEG_buffer_circular extension allows for the content of the buffer to be timed media that dynamically changes over time. The extension "MPEG_buffer_circular" is used with other extensions, such as "MPEG_accessor_timed". Buffers provide access to timed data in the extension "MPEG_buffer_circular". The buffers are not directly timed but may be used with timed data. When this extension is in use, the property "uri" shall not be present, and "byteLength" shall indicate the maximum possible size to accommodate the total number of frames. This type of buffer is used for data streaming from media files. The Media Access Function (MAF) manages the multiple tracks and formats the buffer to be available in the presentation engine.

The carriage format specifies the following classes (functions for some embodiments) to handle the case of "MPEG mesh_linking": VertexCorrespondenceSampleEntry(), VerticesCorrespondenceSample, PoseTransformationSampleEntry(), and PoseTransformationSample. See *ISO*/*IEC 23090-14:2023.*

The class "VertexCorrespondenceSampieEntry()" includes the variable "precision". The variable "precision" specifies the length in bytes of the correspondence values within each sample. The value of "precision" shall be greater than 0 and smaller or equal to 4.

The class "VerticesCorrespondenceSample" includes the variables "vertex_count" and "face_index[i]". The variable "vertex_count" specifies the number of vertices of the mesh this sample applies to and the number of "face_index[i]" values present in the sample. The variable "face_index[i]" provides a mapping of a vertex to a face in a dependent mesh. The variable "face_index[i]" specifies the index of a face in a shadow mesh to which a vertex with an index equal to i of the dependent mesh is mapped.

The class "PoseTransformationSampieEntry()" includes the variables "number_of_nodes", "node_index[i]", and "number_of_morph_targets". The variable "number_of_nodes" specifies the number of nodes for which the transformation is described. The array "node_index[i]" specifies the index of the nodes array in the gITF file which the i-th node in the sample applies to. The variable "number_of_morph_targets" specifies the number of morph targets for which a weight is provided.

The class "PoseTransformationSample" includes the array variables "matrix[i]" and "weight[i]". The array "matrix[i]" specifies the transformation matrix of the i-th node. The array "weight[i]" specifies the weight to be applied to the i-th morph target.

The dynamic data in the correspondences is to update the link between the dependent mesh and the shadow mesh. The dynamic data in the pose and weights are relative to the shadow mesh. This means that the accuracy of the animation of the dependent mesh is strongly constrained by the accuracy of the correspondences between the vertices and polygons of both geometries (dependent mesh and shadow mesh, respectively). This observation is a strong limitation for virtual human digitalization (avatar) and interoperability between different digital environments.

An avatar may have very distinct geometry representations that make correspondence between shapes unreliable. Avatars are typically represented by computer graphics (CG) generated meshes. Avatars, for example, may contain a mesh, skeleton, shape semantics, animation semantics, animation controllers, and avatars may be represented/manipulated with higher-level representations (e.g., Principal Components Analysis (PCA) coefficients). Such a higher-level avatar representation is easier to manipulate, re-animate, and/or map onto other avatar representations.

Another area that the method in *ISO*/*IEC 23090-14:2023* is understood to not answer is partial registration between meshes to isolate areas that may serve to attach avatar accessories (clothes, wearables, and hair model, among other things), animate isolated body parts (hands, facial expressions), map haptic feedbacks in different body regions with a direct link to haptic streamable formats with timed media, map stereo sound streamable format to meshes, and (but not exclusively) have a carriage format that permits dynamic avatar animation that considers the various features (core features for some embodiments) of an avatar e.g., mesh, skeleton, animation parameters and/or semantics, and allows the mapping between other avatar formats with applications in the metaverse or video streaming.

### Avatar carriage format

This section presents a new carriage format that allows the streaming of avatar-specific data to have a dynamic channel that allows the mapping of different avatar representations e.g., avatar_A (MPEG_reference_avatar) maps to avatar_B.

This application uses glTF 2.0 format to explain the concept of a mapping schema between avatars. For some embodiments, other, non-single compression/transmission/rendering formats may be used as a mapping scheme between avatars.

### Polygons correspondence sample entry

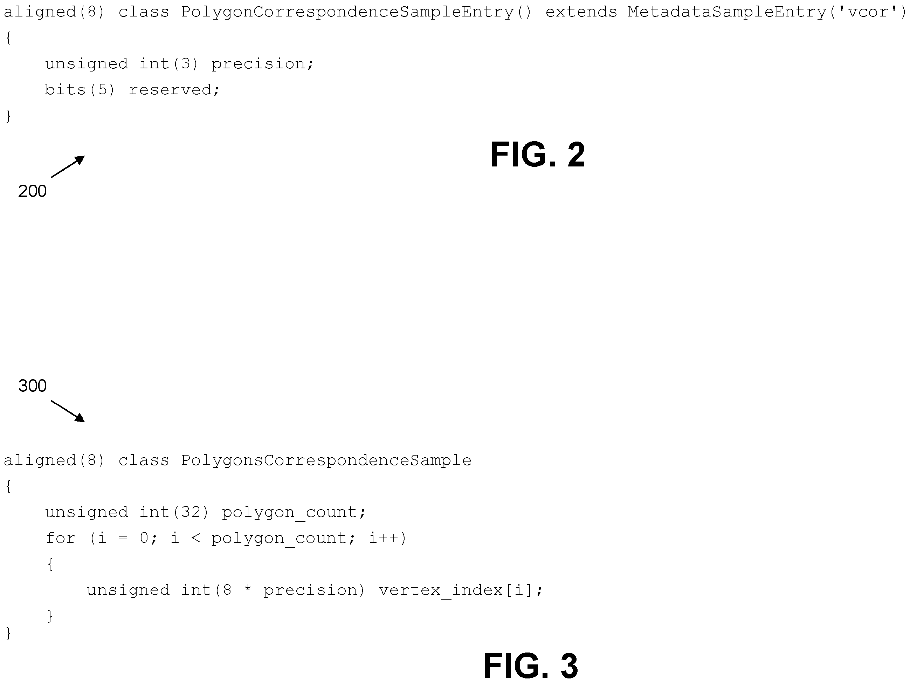

FIG. 2 is a code listing showing an example polygons correspondence sample entry class structure according to some embodiments. A sample entry in a media metadata track may be used to return the polygon correspondence values used to map the polygons of an avatar mesh referenced by the "MPEG_node_avatar" extension onto the vertices of a target avatar mesh. Hereinafter, these avatars are known as the source avatar (MPEG_node_avatar) and the target avatar (other avatar representation). Each time instance is defined in the metadata track as a sample.

For every time frame, the metadata track contains a sample of the polygon correspondence values to the target avatar vertices. A sample contains an integer value that identifies the vertex index of the target avatar to which the polygon of the source mesh is mapped.

In a glTF JSON file, the correspondences values are provided through an extension to the "MPEG_node_avatar" as "MPEG_avatar_mapping". This "MPEG_avatar_mapping" extension refers to an accessor extended with the "MPEG_accessor_timed" and "MPEG_circular_buffer" extensions. The number of correspondence values within a sample and the number of polygons of the "MPEG_node_avatar" mesh shall be smaller or equal.

In the class structure 200, the variable "precision" specifies the length in bytes of the correspondence values within each sample. The value of "precision" shall be greater than 0 and smaller or equal to 4.

### Polygons correspondence sample format

FIG. 3 is a code listing showing an example polygons correspondence sample class structure according to some embodiments. The format of a sample includes the total number of correspondence values and the value itself that is associated with every polygon of the source mesh. The variable "polygon_count" specifies the number of polygons of the source mesh to which a sample references. The variable "vertex_index" specifies the index of a vertex in the target mesh that maps to a polygon of the source mesh with an index equal to i.

If the value of "precision", which has its software declaration in PolygonCorrespondenceSampleEntry, is equal to 1, the componentType of the accessor shall be equal to an UNSIGNED_BYTE (5121). If the value of "precision" is equal to 2, the componentType of the accessor shall be equal to an UNSIGNED_SHORT (5123). If the value of "precision" is equal to 3, the componentType of the accessor shall be equal to an UNSIGNED_INT (5125). If the value of "precision" is equal to 4, the componentType of the accessor shall be equal to an FLOAT (5126). Furthermore, the value of "precision" determines the size of each index location in vertex_index[].

For samples using the class structure "PolygonsCorrespondenceSample" 300, the variable "polygon_count" serves as "count" in the corresponding timed accessor information header fields for the corresponding frame of the circular buffer. The array "vertex_index[]" shall be made available in the corresponding frame of the circular buffer. The for loop declares the size of each index of the "vertex_index[]" array for indices 0 to (polygon_count -1). Each such declaration sets the size based on the value of "precision".

### Displacement sample entry

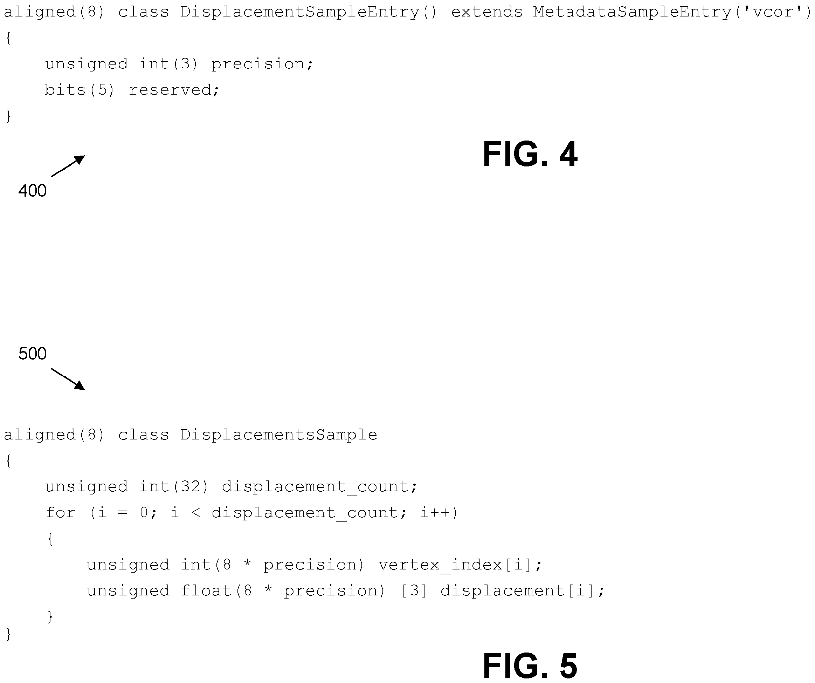

FIG. 4 is a code listing showing an example displacement sample entry class structure according to some embodiments. A sample entry in a media metadata track may be used to return the displacement values used to deform the avatar mesh referenced by the "MPEG_node_avatar" extension. Hereinafter, this avatar is known as the source avatar (MPEG_node_avatar). Each time instance is defined in the metadata track as a sample.

For every time frame, the metadata track contains a sample of the displacement values of the source avatar vertices. A sample contains an integer value that identifies the vertex index of the source avatar to which the displacement value is applied.

In a glTF JSON file, the displacement values are provided through an extension to the "MPEG_node_avatar" as "MPEG_avatar_mapping". This "MPEG_avatar_mapping" extension refers to an accessor extended with the "MPEG_accessor_timed" and "MPEG_circular_buffer" extensions. The number of displacement values within a sample and the number of vertices of the "MPEG_node_avatar" mesh shall be smaller or equal.

In the class structure 400, the variable "precision" specifies the length in bytes of the correspondence vertices within each sample. The value of "precision" shall be greater than 0 and smaller or equal to 4.

### Displacement sample format

FIG. 5 is a code listing showing an example displacement sample class structure according to some embodiments. The format of a sample includes the total number of displacement values and the value itself that is associated with a vertex index of the source mesh. The variable "displacements_count" specifies the number of displacement vectors available for the source mesh to which a sample references. The variable "vertex index" specifies the index of a vertex in the source mesh to which the displacement is applied. The array "displacement[i]" specifies the displacement vector of the vertex_index[i] of the source mesh.

If the value of "precision", which has its software declaration in DisplacementsSampleEntry, is equal to 1, the componentType of the accessor shall be equal to an UNSIGNED_BYTE (5121). If the value of "precision" is equal to 2, the componentType of the accessor shall be equal to an UNSIGNED_SHORT (5123). If the value of "precision" is equal to 3, the componentType of the accessor shall be equal to an UNSIGNED_INT (5125). If the value of "precision" is equal to 4, the componentType of the accessor shall be equal to an FLOAT (5126). Furthermore, the value of "precision" determines the size of each index location in vertex_index[] and in displacement[].

For samples using the class structure "DisplacementsSample" 500, the variable "displacements_count" serves as "count" in the corresponding timed accessor information header fields for the corresponding frame of the circular buffer. The arrays "vertex_index[]" and "displacement[]" shall be made available in the corresponding frame of the circular buffer. The for loop declares the size of each index of the "vertex_index[]" and "displacement[]" arrays for indices 0 to (displacement_count - 1). Each such declaration sets the size based on the value of "precision".

### Joints correspondence sample entry

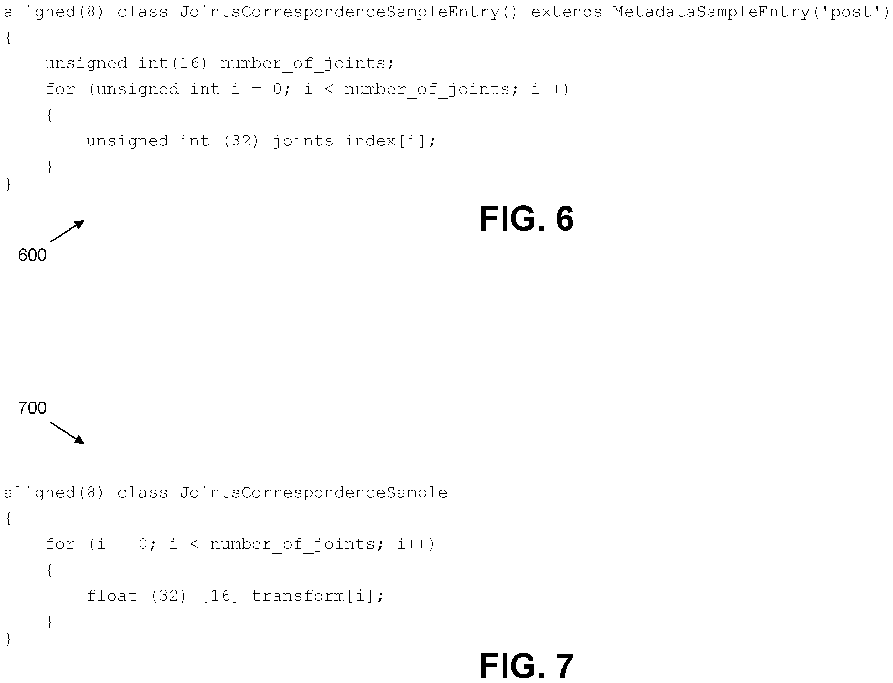

FIG. 6 is a code listing showing an example joint correspondence sample entry class structure according to some embodiments. A sample entry in a media metadata track may be used to return the joint correspondence values and joint transformation used to map the joints of an avatar mesh referenced by the "MPEG_node_avatar" extension onto the joints of a target avatar mesh. Hereinafter, these avatars are known as the source avatar (MPEG_node_avatar) and the target avatar (other avatar format). Each time instance is defined in the metadata track as a sample.

For every time frame, the metadata track contains a sample of the joint correspondence values to the target avatar joints and its relative transformation matrix. A sample contains an integer value that identifies the joint index of the target avatar to which the joint of the source avatar is mapped and a transformation matrix of the target avatar joints. The transformation matrix is the skeletal pose of the target avatar at a time instance and the transformation matrix may be retargeted to the source avatar to mimic the behavior of the target avatar.

In a glTF JSON file, the joint correspondences and transformation values are provided through an extension to the "MPEG_node_avatar" as "MPEG_avatar_mapping". This "MPEG_avatar_mapping" extension refers to an accessor extended with the "MPEG_accessor_timed" and "MPEG_circular_buffer" extensions. The number of joint correspondence and transformation values within a sample and the number of joints of the "MPEG_node_avatar" mesh shall be smaller or equal.

In the class structure 600, the variable "number_of_Joints" specifies the number of joints for which the transformation is applied. The array "joints_index[i]" specifies the index of the joint in the joints array to which the i-th joint node in the sample applies.

### Joints correspondence sample format

FIG. 7 is a code listing showing an example joint correspondence sample class structure according to some embodiments. The format of a sample includes the total number of joint correspondence values, the value itself, and the joint transformation matrix that is associated with each joint of the source mesh. The array "transform[i]" specifies the transformation matrix of the target avatar.

For some embodiments, there is no "precision" value used for joints because joints use 32-bit unsigned integers and float matrices for transforms. If Immutable is set to "True" and "bufferView" is not present, the value "count" in the accessor is equal to the value of the variable "number_of_joints". Otherwise, the variable "number_of_joints" is made available as the "count" attribute in the accessor.

For samples using the class structure "JointsCorrespondenceSample" 700, the array "transform[i]" is available to the corresponding frame of a circular buffer. The for loop declares the size of each index of the "transform[]" array for indices 0 to (number_of_joints - 1).

### Morph targets correspondence sample entry

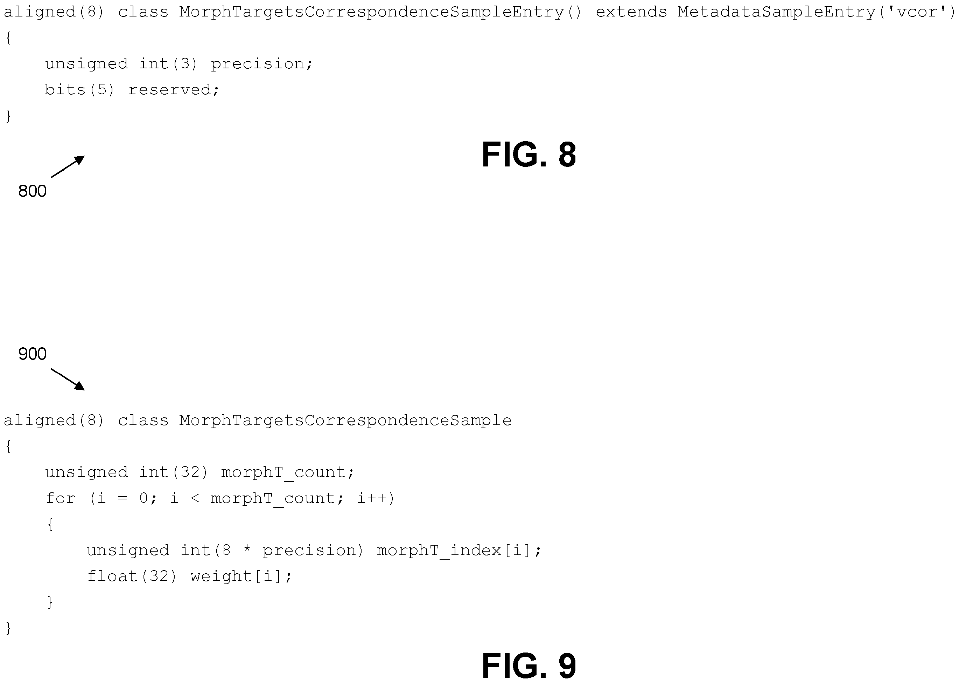

FIG. 8 is a code listing showing an example morph targets correspondence sample entry class structure according to some embodiments. A sample entry in a media metadata track may be used to return the morph target correspondence values used to map the morph targets of an avatar mesh referenced by the "MPEG_node_avatar" extension onto the morph targets of a target avatar mesh. Hereinafter, these avatars are known as the source avatar (MPEG_node_avatar) and target avatar (other avatar format). Each time instance is defined in the metadata track as a sample. For every time frame, the metadata track contains a sample of the morph targets correspondence values to the target avatar morph targets. A sample contains an integer value that identifies the morph targets index of the target avatar to which the morph targets of the source mesh is mapped.

In a glTF JSON file, the correspondence values are provided through an extension to the "MPEG_node_avatar" as "MPEG_avatar_mapping". This "MPEG_avatar_mapping" extension refers to an accessor extended with the "MPEG_accessor_timed" and "MPEG_circular_buffer" extensions. The number of correspondence values within a sample and the number of morph targets of the "MPEG_node_avatar" mesh shall be smaller or equal.

In the class structure 800, the variable "precision" specifies the length in bytes of the correspondence values within each sample. The value of "precision" shall be greater than 0 and smaller or equal to 4.

### Morph targets correspondence sample format

FIG. 9 is a code listing showing an example morph targets correspondence sample class structure according to some embodiments. The format of a sample includes the total number of correspondence values and the value itself that is associated with each morph target of the source mesh. The variable "morphT_count" specifies the number of morph targets of the source mesh to which a sample references. The variable "morphtT_jndex" specifies the index of a morph target in the target mesh that maps to a morph target of the source mesh with an index equal to i. The array "weight[i]" specifies the weight of a morph target in the target mesh to be applied to a morph target of the source mesh.

If the value of "precision", which has its software declaration in MorphTargetsCorrespondenceSampleEntry, is equal to 1, the componentType of the accessor shall be equal to an UNSIGNED_BYTE (5121). If the value of "precision" is equal to 2, the componentType of the accessor shall be equal to an UNSIGNED_SHORT (5123). If the value of "precision" is equal to 3, the componentType of the accessor shall be equal to an UNSIGNED_INT (5125). If the value of "precision" is equal to 4, the componentType of the accessor shall be equal to an FLOAT (5126). Furthermore, the value of "precision" determines the size of each index location in morphT_index[].

For samples using the class structure "MorphTargetsCorrespondenceSample" 900, the variable "morphT_count" serves as "count" in the corresponding timed accessor information header fields for the corresponding frame of the circular buffer. The arrays "morphT_index[]" and "weight[]" shall be made available in the corresponding frame of the circular buffer. The for loop declares the size of each index of the "morphT_index[]" and "weight[]" arrays for indices 0 to (morphT_count - 1). The declaration for "morphT_index[]" sets the size based on the value of "precision".

### Morph targets animation sample entry

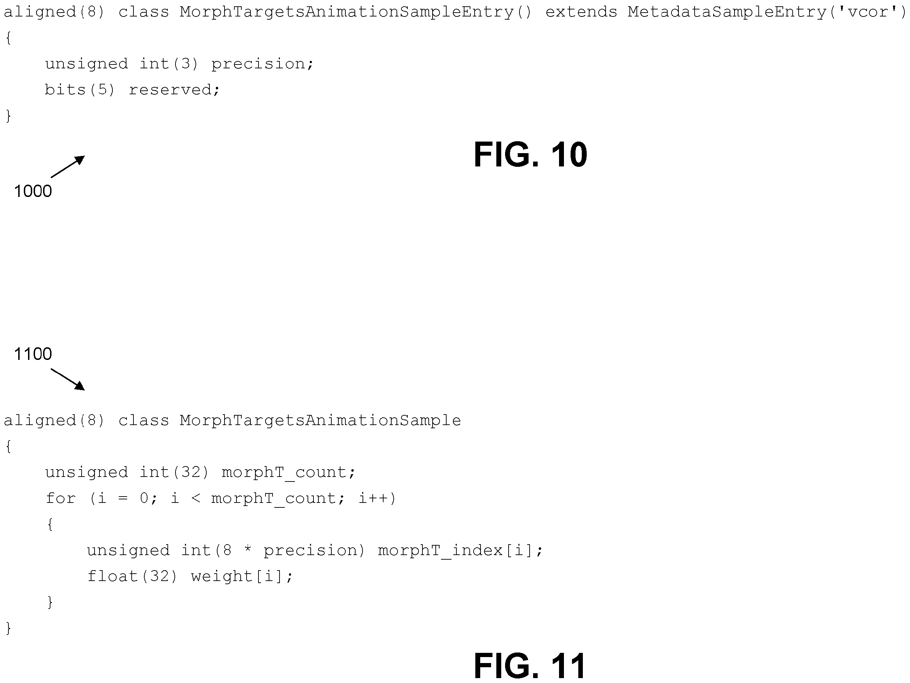

FIG. 10 is a code listing showing an example morph targets animation sample entry class structure according to some embodiments. A sample entry in a media metadata track may be used to animate an avatar mesh referenced by the "MPEG_node_avatar" extension using its morph targets. Hereinafter, this avatar is known as source avatar (MPEG_node_avatar). Each time instance is defined in the metadata track as a sample.

For every time frame, the metadata track contains a sample of the morph targets animation values to the source avatar morph targets. A sample contains an integer value that identifies the morph targets index of the source avatar to which the morph targets weights are applied.

In a glTF JSON file, the animation values are provided through an extension to the "MPEG_node_avatar" as "MPEG_avatar_mapping". This "MPEG_avatar_mapping" extension refers to an accessor extended with "MPEG_accessor_timed" and "MPEG_circular_buffer" extensions. The number of correspondence values within a sample and the number of morph targets of the "MPEG_node_avatar" mesh shall be smaller or equal.

In the class structure 1000, the variable "precision" specifies the length in bytes of the correspondence values within each sample. The value of "precision" shall be greater than 0 and smaller or equal to 4.

### Morph targets animation sample format

FIG. 11 is a code listing showing an example morph targets animation sample class structure according to some embodiments. The format of a sample includes the total number of correspondence values and the value itself that is associated with each morph target of the source mesh. The variable "morphT_count" specifies the number of morph targets of the source mesh to which a sample references. The variable "morphtT_index" specifies the index of a morph target in the source mesh with an index equal to i. The array "weight[i]" specifies the weight of a morph target to be applied to the source mesh.

If the value of "precision", which has its software declaration in MorphTargetsAnimationSampleEntry, is equal to 1, the componentType of the accessor shall be equal to an UNSIGNED_BYTE (5121). If the value of "precision" is equal to 2, the componentType of the accessor shall be equal to an UNSIGNED_SHORT (5123). If the value of "precision" is equal to 3, the componentType of the accessor shall be equal to an UNSIGNED_INT (5125). If the value of "precision" is equal to 4, the componentType of the accessor shall be equal to an UNSIGNED_INT (5125). Furthermore, the value of "precision" determines the size of each index location in morphT_index[].

For samples using the class structure "MorphTargetsAnimationSample" 1100, the variable "morphT_count" serves as "count" in the corresponding timed accessor information header fields for the corresponding frame of the circular buffer. The array "morphT_index[]" shall be made available in the corresponding frame of the circular buffer. The for loop declares the size of each index of the "morphT_index[]" and "weight[]" arrays for indices 0 to (morphT_count - 1). The "morphT_index[]" declaration sets the size based on the value of "precision".

### Mappings correspondence sample entry

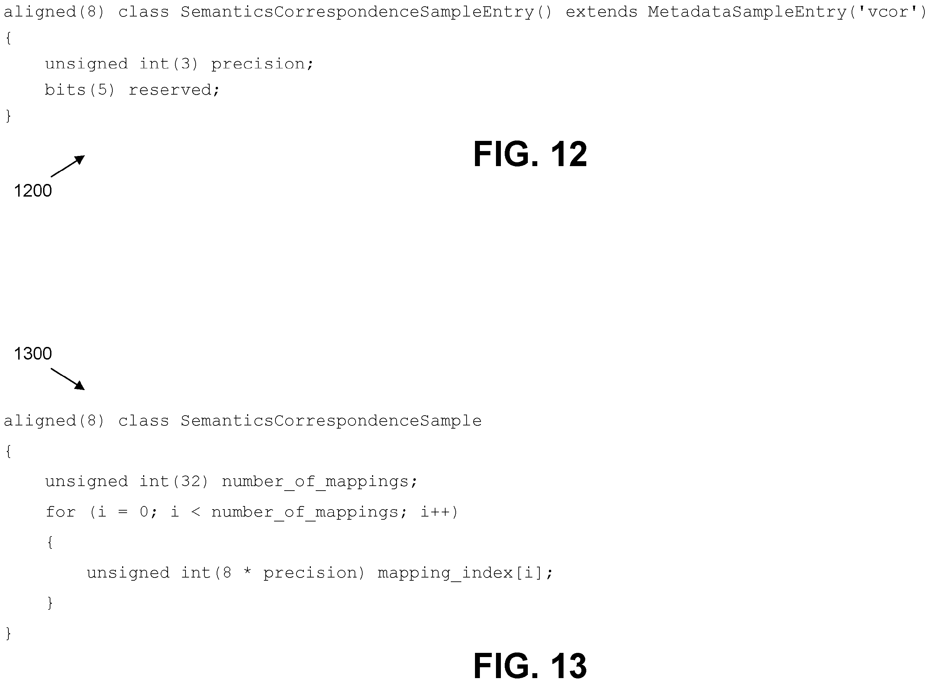

FIG. 12 is a code listing showing an example mappings correspondence sample entry class structure according to some embodiments. A sample entry in a media metadata track may be used to return the semantic correspondence values used to map the semantics of an avatar mesh referenced by the "MPEG_node_avatar" extension onto the semantics of a target avatar mesh. Hereinafter, these avatars are known as the source avatar (MPEG_node_avatar) and target avatar (other avatar format). Each time instance is defined in the metadata track as a sample.

For every time frame, the metadata track contains a sample of the semantics correspondence values to the target avatar semantics. A sample contains an integer value that identifies the semantics index of the target avatar to which the semantics of the source avatar are mapped.

In a glTF JSON file, the semantics correspondences values are provided through an extension to the "MPEG_node_avatar" as "MPEG_avatar_mapping". This "MPEG_avatar_mapping" refers to an accessor extended with the "MPEG_accessor_timed" and "MPEG_circular_buffer" extensions. The number of semantic correspondence values within a sample and the number of semantics of the "MPEG_node_avatar" mesh shall be smaller or equal.

In the class structure 1200, the variable "precision" specifies the length in bytes of the correspondence values within each sample. The value of "precision" shall be greater than 0 and smaller or equal to 4.

### Mappings correspondence sample format

FIG. 13 is a code listing showing an example mappings correspondence sample class structure according to some embodiments. The format of a sample includes the total number of mapping correspondence values and the value itself that is associated with each mapping in the array of mappings of the source mesh. The variable "number_of_mappings" specifies the number of mappings for which the correspondences are applied. The array "mapping_index[i]" specifies the mapping in the mappings array of the source avatar to which the i-th path in the sample applies.

If the value of "precision", which has its software declaration in SemanticsCorrespondenceSampleEntry, is equal to 1, the componentType of the accessor shall be equal to an UNSIGNED_BYTE (5121). If the value of "precision" is equal to 2, the componentType of the accessor shall be equal to an UNSIGNED_SHORT (5123). If the value of "precision" is equal to 3, the componentType of the accessor shall be equal to an UNSIGNED_INT (5125). If the value of "precision" is equal to 4, the componentType of the accessor shall be equal to an UNSIGNED_INT

(5125). Furthermore, the value of "precision" determines the size of each index location in mapping_index[].

For samples using the class structure "SemanticsCorrespondenceSample" 1300, the variable "number_of_mappings" serves as "count" in the corresponding timed accessor information header fields for the corresponding frame of the circular buffer. The array "mapping_index[]" shall be made available in the corresponding frame of the circular buffer. The for loop declares the size of each index of the "mapping_index[]" array for indices 0 to (number_of_mappings -1). Each such declaration sets the size based on the value of "precision".

### Keypoints correspondence sample entry

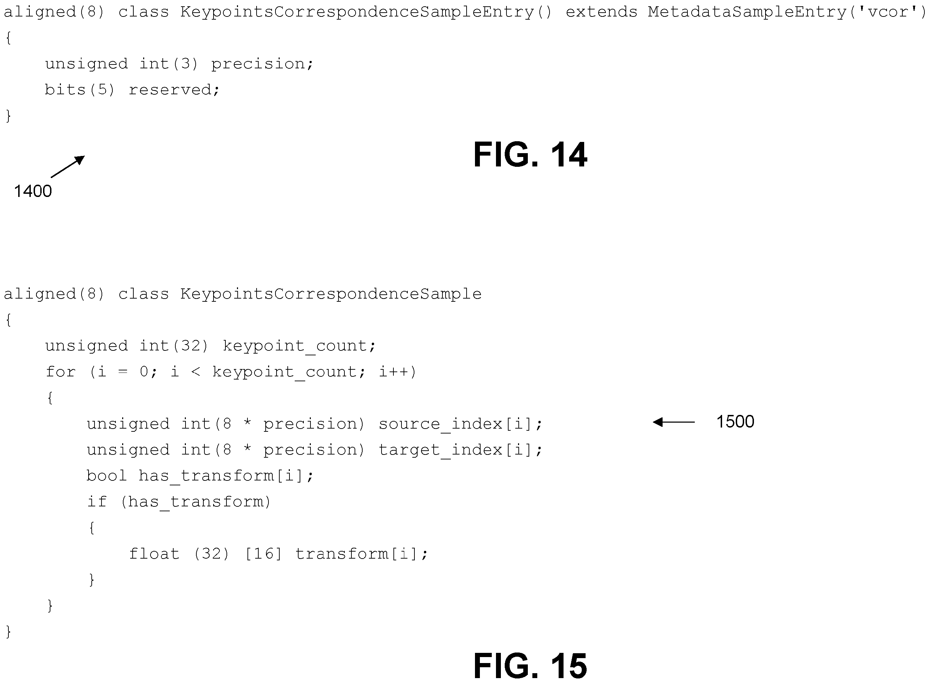

FIG. 14 is a code listing showing an example keypoints correspondence sample entry class structure according to some embodiments. Keypoints are locations on the surface of the shape. Each keypoint may be defined by the index of a triangle on the shape and three weights (which sum to one) to locate the keypoint on the triangle. A sample entry in a media metadata track may be used to return the keypoints correspondence values used to map the keypoints of an avatar mesh referenced by the "MPEG_node_avatar" extension onto the keypoints of a target avatar mesh. Hereinafter, these avatars are known as the source avatar (MPEG_node_avatar) and target avatar (other avatar representation). Each time instance is defined in the metadata track as a sample.

For every time frame, the metadata track contains a sample of the keypoints correspondence values to the target avatar vertices. A sample contains two integer values that identify the keypoints index of the target avatar to which the keypoints of the source mesh is mapped.

In a glTF JSON file, the correspondences values are provided through an extension to the "MPEG_node_avatar" as "MPEG_avatar_mapping". This "MPEG_avatar_mapping" extension refers to an accessor extended with "MPEG_accessor_timed" and "MPEG_circular_buffer" extensions. The number of correspondence values within a sample and the number of keypoints of the "MPEG_node_avatar" mesh shall be smaller or equal.

In the class structure 1400, the variable "precision" specifies the length in bytes of the correspondence values within each sample. The value of "precision" shall be greater than 0 and smaller or equal to 4.

### Keypoints correspondence sample format

FIG. 15 is a code listing showing an example keypoints correspondence sample class structure according to some embodiments. The format of a sample includes the total number of correspondence values and the values itself that is associated with each keypoint of the source and target mesh. The variable "keypoint_count" specifies the number of keypoints to which a sample references. The array "source_index[]" specifies the index of a keypoint in the source mesh that maps to a keypoint of the target mesh with an index equal to i. The array "target_index[]" specifies the index of a keypoint in the target mesh that maps to a keypoint of the source mesh with an index equal to i. The array "has_transform[i]" specifies if the keypoints have a transformation matrix to be encoded. The variable "transform[i]" specifies the transformation matrix of the target avatar keypoints.

If the value of "precision", which has its software declaration in KeypointsCorrespondenceSampleEntry, is equal to 1, the componentType of the accessor shall be equal to an UNSIGNED_BYTE (5121). If the value of "precision" is equal to 2, the componentType of the accessor shall be equal to an UNSIGNED_SHORT (5123). If the value of "precision" is equal to 3, the componentType of the accessor shall be equal to an UNSIGNED_INT (5125). If the value of "precision" is equal to 4, the componentType of the accessor shall be equal to an UNSIGNED_INT (5125). Furthermore, the value of "precision" determines the size of each index location in the arrays "source_index[]" and "target_index[]".

For samples using the class structure "KeypointsCorrespondenceSample" 1500, the variable "keypoint_count" serves as "count" in the corresponding timed accessor information header fields for the corresponding frame of the circular buffer. The arrays "source_index[]", "target_index[]", and "has_transform[]" shall be made available in the corresponding frame of the circular buffer. Additionally, the array "transform[]" shall be made available in the corresponding frame of the circular buffer if "has_transform[]" is true. The for loop declares the size of each index of the "source_index[]" and "target_index[]" arrays for indices 0 to (keypoint_count - 1). Each such declaration sets the size based on the value of "precision".

### Use Cases

For some embodiments, a user may control an avatar in real time, e.g., for a multi-user telepresence call. File segments may be authored in real time (based on local sensor readings of user pose, among other things), and the resulting segments are streamed to a conferencing controller or to other user endpoints.

For some embodiments, a gaming server animates a non-player character (NPC) avatar based on gaming logic. File segments that include correspondences and animation data are streamed to one or more devices of the users playing the game.

For some embodiments, a pre-made animation may be stored in a file format described herein and may be played back locally from the file. Furthermore, the pre-made animation may be streamed from a server to a client rendering device. These actions may be part of a 3D interactive movie type of experience.

For some embodiments, streaming may use the class structures shown in FIGs. 2-15 to describe and/or store correspondences and animation data for an avatar.

For some embodiments, the correspondences and/or amination data for an avatar is configured to support an ISO/BMFF format, such as ISO/BMFF-14496-12.

For some embodiments, the correspondences and/or amination data for an avatar is configured to support timed metadata, such as ISO/IEC 23001-10.

For some embodiments, the correspondences and/or amination data for an avatar is configured to support real-time streaming of the avatar data.

For some embodiments of the shadow mesh joint transforms and morph target weights, the target of those weights is not a shadow mesh (a component in the scope of MPEG mesh linking), but an avatar mesh. Furthermore, for some embodiments, morph target weights may be updated by itself without other updates. Also, skin transforms may be updated by itself without other updates. For an avatar application that does not need MPEG mesh linking mechanisms, it may be easier to deal with avatar joints/morph target rather than ones for a shadow mesh.

For some embodiments, the idea of the packets described in this application is to freely update the content of any accessor. Other packets may update the data in the gITF, but such updates must always be the same accessor. For instance, for some embodiments, the morph targets correspondence sample format always updates the morph target weights. The morph targets correspondence sample format is not be able to update another part of the glTF data. In other words, the mappings correspondence sample format may update anything, including what is updated in all the other sections, but such updates may be done in a less efficient way that uses more memory.

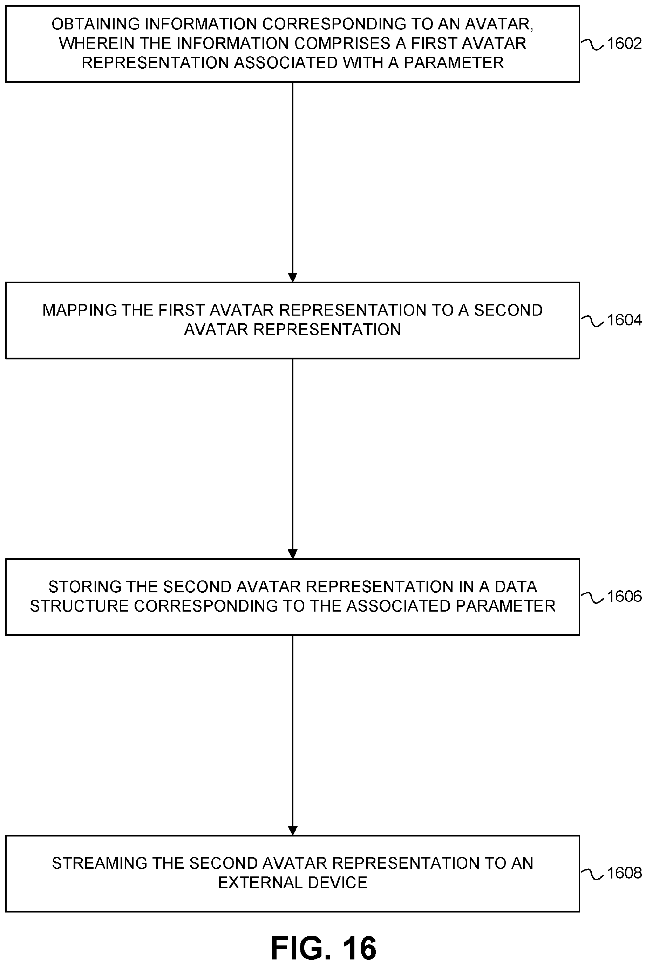

FIG. 16 is a flowchart illustrating an example process for mapping between avatar representations according to some embodiments. For some embodiments, an example process 1600 may include obtaining 1602 information corresponding to an avatar, wherein the information comprises a first avatar representation associated with a parameter. For some embodiments, the example process 1600 may further include mapping 1604 the first avatar representation to a second avatar representation. For some embodiments, the example process 1600 may further include storing 1606 the second avatar representation in a data structure corresponding to the associated parameter. For some embodiments, the example process 1600 may further include streaming 1608 the second avatar representation to an external device.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

Another example method in accordance with some embodiments may include: obtaining information corresponding to an avatar, wherein the information includes a first avatar representation associated with a parameter; mapping the first avatar representation to a second avatar representation, wherein the first avatar representation corresponds to a volumetric mesh identifying vertices corresponding to the avatar, and wherein the second avatar representation corresponds to a shadow mesh identifying polygons corresponding to the avatar; storing the second avatar representation in a data structure corresponding to the associated parameter; and streaming the second avatar representation to an external device.

Another example apparatus in accordance with some embodiments may include: a processor; and a non-transitory computer-readable medium storing instructions operative, when executed by the processor, to cause the apparatus to perform any one of the methods listed above.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: receiving, from a server, a first avatar representation, wherein the first avatar representation is associated with a parameter corresponding to an avatar; mapping the first avatar representation to a second avatar representation, wherein the first avatar representation corresponds to a shadow mesh identifying polygons corresponding to the avatar, and wherein the second avatar representation corresponds to a volumetric mesh identifying vertices corresponding to the avatar; storing the second avatar representation in a data structure corresponding to the associated parameter; and animating the second avatar representation in an immersive environment.

Some embodiments of the example method may further include receiving a plurality of timed, media metadata track frames, wherein at least one of the plurality of timed, media metadata track frames includes a series of correspondence values used with the mapping.

For some embodiments of the example method, the parameter corresponds to a shape, semantics, articulation, or animation parameter of the avatar.

For some embodiments of the example method, the second avatar representation includes a series of time-based data segments.

For some embodiments of the example method, mapping the first avatar representation to a second avatar representation includes mapping a source avatar mesh to a target avatar mesh, the first avatar representation is associated with the source avatar mesh, and the second avatar representation is associated with the target avatar mesh.

For some embodiments of the example method, mapping the first avatar representation to a second avatar representation includes mapping semantics of a source avatar mesh to semantics of a target avatar mesh.

For some embodiments of the example method, mapping the first avatar representation to a second avatar representation includes determining a correspondence between a source avatar mesh and a target avatar mesh, the first avatar representation is associated with the source avatar mesh, and the second avatar representation is associated with the target avatar mesh.

For some embodiments of the example method, determining the correspondence between the source avatar mesh and the target avatar mesh includes determining a correspondence of joints between the source avatar mesh and the target avatar mesh.

For some embodiments of the example method, determining the correspondence between the source avatar mesh and the target avatar mesh includes determining a morph target correspondence between the source avatar mesh and the target avatar mesh.

For some embodiments of the example method, mapping the first avatar representation to a second avatar representation includes determining a morph target animation between a source avatar mesh and a target avatar mesh, the first avatar representation is associated with the source avatar mesh, and the second avatar representation is associated with the target avatar mesh.

For some embodiments of the example method, mapping the first avatar representation to a second avatar representation includes mapping keypoints of a source avatar mesh to keypoints of a target avatar mesh.

For some embodiments of the example method, at least one of the first avatar representation and the second avatar representation is configured to support a MPEG-based format.

For some embodiments of the example method, at least one of the first avatar representation and the second avatar representation is configured to support a gITF-based format.

For some embodiments of the example method, at least one of the first avatar representation and the second avatar representation is configured to support an ISO/BMFF-based format.

An example apparatus in accordance with some embodiments may include: a processor; and a non-transitory computer-readable medium storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
receiving, from a server, a first avatar representation,
wherein the first avatar representation is associated with a parameter corresponding to an avatar;
mapping the first avatar representation to a second avatar representation,
wherein the first avatar representation corresponds to a shadow mesh identifying polygons corresponding to the avatar, and
wherein the second avatar representation corresponds to a volumetric mesh identifying vertices corresponding to the avatar;
storing the second avatar representation in a data structure corresponding to the associated parameter; and
animating the second avatar representation in an immersive environment.

2. The method of claim 1, further comprising:
receiving a plurality of timed, media metadata track frames,
wherein at least one of the plurality of timed, media metadata track frames comprises a series of correspondence values used with the mapping.

3. The method of any one of claims 1-2, wherein the parameter corresponds to a shape, semantics, articulation, or animation parameter of the avatar.

4. The method of any one of claims 1-3, wherein the second avatar representation comprises a series of time-based data segments.

5. The method of any one of claims 1-4,
wherein mapping the first avatar representation to a second avatar representation comprises mapping a source avatar mesh to a target avatar mesh,
wherein the first avatar representation is associated with the source avatar mesh, and wherein the second avatar representation is associated with the target avatar mesh.

6. The method of any one of claims 1-4, wherein mapping the first avatar representation to a second avatar representation comprises mapping semantics of a source avatar mesh to semantics of a target avatar mesh.

7. The method of any one of claims 1-4,
wherein mapping the first avatar representation to a second avatar representation comprises determining a correspondence between a source avatar mesh and a target avatar mesh,
wherein the first avatar representation is associated with the source avatar mesh, and wherein the second avatar representation is associated with the target avatar mesh.

8. The method of claim 7, wherein determining the correspondence between the source avatar mesh and the target avatar mesh comprises determining a correspondence of joints between the source avatar mesh and the target avatar mesh.

9. The method of claim 7, wherein determining the correspondence between the source avatar mesh and the target avatar mesh comprises determining a morph target correspondence between the source avatar mesh and the target avatar mesh.

10. The method of any one of claims 1-4,
wherein mapping the first avatar representation to a second avatar representation comprises determining a morph target animation between a source avatar mesh and a target avatar mesh,
wherein the first avatar representation is associated with the source avatar mesh, and wherein the second avatar representation is associated with the target avatar mesh.

11. The method of any one of claims 1-4, wherein mapping the first avatar representation to a second avatar representation comprises mapping keypoints of a source avatar mesh to keypoints of a target avatar mesh.

12. The method of any one of claims 1-11, wherein at least one of the first avatar representation and the second avatar representation is configured to support a MPEG-based format.

13. The method of any one of claims 1-12, wherein at least one of the first avatar representation and the second avatar representation is configured to support a gITF-based format.

14. The method of any one of claims 1-13, wherein at least one of the first avatar representation and the second avatar representation is configured to support an ISO/BMFF-based format.

15. An apparatus comprising:
a processor; and
a non-transitory computer-readable medium storing instructions operative, when executed by the processor, to cause the apparatus to perform the method of any one of claims 1 through 14.
